# EUROPÄISCHE PATENTSCHRIFT

(11) **EP 3 648 920 B1**
(45) Veröffentlichungstag und Bekanntmachung des Hinweises auf die Patenterteilung: **30.08.2023**
(21) Anmeldenummer: 18735573.0
(22) Anmeldetag: 02.07.2018
(51) Int. Cl.: B23K 1/08

(54) **VERFAHREN ZUM BETREIBEN EINER LÖTVORRICHTUNG, LÖTVORRICHTUNG**
METHOD FOR OPERATING A SOLDERING DEVICE, SOLDERING DEVICE
PROCÉDÉ SERVANT À FAIRE FONCTIONNER UN DISPOSITIF DE BRASAGE ET DISPOSITIF DE BRASAGE

(30) Priorität: 05.07.2017 DE 102017114954
(43) Veröffentlichungstag der Anmeldung: 13.05.2020
(73) Patentinhaber: Ersa GmbH, 97877 Wertheim (DE)
(72) Erfinder: SCHAEFER, Michael, 97900 Kuelsheim (DE)
(74) Vertreter: DREISS Patentanwälte PartG mbB
(86) Internationale Anmeldenummer: PCT/EP2018/067748
(87) Internationale Veröffentlichungsnummer: WO 2019/007873

(56) Entgegenhaltungen:
- EP-A1- 2 138 259
- WO-A1-2011/009594
- JP-A- H07 131 143
- US-A1- 2004 150 714

## Beschreibung

Die Erfindung betrifft ein Verfahren zum Betreiben einer Lötvorrichtung und eine Lötvorrichtung, die ausgebildet ist dieses Verfahren auszuführen.

Herkömmliche Lötvorrichtungen umfassen einen Tiegel für Lot und eine Lötdüse die aus dem Tiegel herausragt. Im Tiegel erwärmtes Lot wird mittels Induktionspumpe in einer Richtung, die der Schwerkraft entgegengesetzt ist, durch eine Öffnung der Lötdüse gepumpt. Entlang einer äußeren Oberfläche der Lötdüse fließt das Lot aufgrund der Schwerkraft zurück in den Tiegel. Dadurch entsteht eine Lötwelle.

Bei Lötvorgängen ist es von Bedeutung, die Verwendung einer geeigneten Lötdüse und einer Lötwelle mit geeigneten Eigenschaften wie Höhe der Lötwelle und gleichmäßiges Ablaufen des Lots über eine Oberfläche der Lötdüse sicherzustellen.

Aus der JP H07-131143A und der EP 2 138 259 A1 sind Verfahren zum Betreiben einer Lötvorrichtung sowie zugehörige Lötvorrichtungen mit Merkmalen des Oberbegriffs des Patentanspruchs 1 bekannt.

Der Erfindung die Aufgabe zugrunde, den Lötvorgang noch besser zu überwachen.

Dies wird durch das Verfahren und die Vorrichtung nach den unabhängigen Ansprüchen erreicht.

Bezüglich des Verfahrens zum Betreiben der Lötvorrichtung, wird eine bildliche Darstellung wenigstens eines Teils einer Lötvorrichtung erfasst, wobei mittels automatisierter Verarbeitung der bildlichen Darstellung abhängig von Information über die Lötvorrichtung aus der bildlichen Darstellung ein momentaner Betriebszustand der Lötvorrichtung bestimmt wird.

Erfindungsgemäß wird die Information über die Lötvorrichtung abhängig von einer Referenzdarstellung wenigstens eines Teils der Lötvorrichtung bestimmt, wobei die Referenzdarstellung als bildliche Darstellung erfasst wird oder wobei die Referenzdarstellung als bildliche Darstellung aus einem Speicher gelesen wird und wobei die Referenzdarstellung einen Oxidationsgrad der Lötdüse charakterisiert. Dadurch wird eine Eignung der Lötdüse für den Lötvorgang überwacht.

Vorteilhafterweise charakterisiert die Referenzdarstellung eine Lötwelle mit einer vorgegebenen Höhe. Dies ermöglicht es eine Lötwellenhöhe zu bewerten, ohne dass die Lötvorrichtung für jede Bewertung eine Lötwellenhöhenmessung mittels herkömmlichen Verfahrens durchführen muss.

Vorteilhafterweise wird die Referenzdarstellung erfasst, wenn eine momentane Lötwelle die vorgegebene Höhe erreicht oder überschreitet. Dadurch kann die Referenzdarstellung einfach ausgelöst werden. Der Zeitpunkt, zu dem die vorgegebene Höhe erreicht wird, wird dazu beispielsweise bei Inbetriebnahme einmalig mittels einer herkömmlichen Lötwellenhöhenmessung ermittelt.

Vorteilhafterweise wird die Referenzdarstellung erfasst, wenn ein Stromkreis geschlossen wird, durch den ein Strom durch die momentane Lötwelle und einen Kontakt fließt, wobei ein Tiegel der Lötvorrichtung oder eine Lötdüse der Lötvorrichtung in vorgegebener Position in der Lötvorrichtung angeordnet wird. Dadurch kann die Referenzdarstellung mit einer herkömmlichen Lötwellenmessung automatisiert abgeglichen werden.

Vorteilhafterweise wird die Information über die bildliche Darstellung mit Information über die Referenzdarstellung verglichen, wobei abhängig von einem Ergebnis des Vergleichs eine Abweichung einer momentanen Höhe der momentanen Lötwelle von der vorgegebenen Höhe erkannt wird und/oder ein Betriebszustand der Lötvorrichtung zur Lötwellenhöhenmessung wahlweise zugelassen oder verhindert wird. Dies ermöglicht die gezielte Einsetzung eines herkömmlichen Verfahrens zur Lötwellenhöhenmessung.

Vorteilhafterweise charakterisiert die Referenzdarstellung eine Lötdüse, die in die Lötvorrichtung einsetzbar ist. Damit wird automatisiert überprüft, ob die Löstdüse den Anforderungen an den Lötprozess entspricht.

Vorteilhafterweise wird Information über die bildliche Darstellung mit Information über die Referenzdarstellung verglichen, wobei abhängig von einem Ergebnis des Vergleichs eine momentan in der Lötvorrichtung eingesetzte Lötdüse erkannt wird und/oder ein Betriebszustand der Lötvorrichtung zum Löten mit der eingesetzten Lötdüse wahlweise zugelassen oder verhindert wird. Dies ermöglicht es den Lötvorgang zu verhindern, wenn eine ungeeignete Lötdüse eingesetzt ist.

Vorteilhafterweise wird Information über die bildliche Darstellung mit Information über die Referenzdarstellung verglichen, wobei abhängig von einem Ergebnis des Vergleichs ein momentaner Oxidationsgrad der Lötdüse erkannt wird und/oder ein Betriebszustand der Lötvorrichtung zum Aufbrechen einer Oxidschicht wahlweise zugelassen oder verhindert wird. Dies ermöglicht es, den Vorgang zum Aufbrechen der Oxidschicht gezielt einzusetzen.

Bezüglich der Lötvorrichtung, ist vorgesehen, dass die Lötvorrichtung eine Erfassungseinrichtung und eine Recheneinrichtung umfasst, wobei die Erfassungseinrichtung ausgebildet ist eine bildliche Darstellung wenigstens eines Teils der Lötvorrichtung zu erfassen, wobei die Recheneinrichtung ausgebildet ist, mittels automatisierter Verarbeitung der bildlichen Darstellung abhängig von Information über die Lötvorrichtung aus der bildlichen Darstellung ein momentaner Betriebszustand der Lötvorrichtung zu bestimmen. Als Erfassungseinrichtung wird bevorzugt eine digitale Kamera eingesetzt. Als Recheneinrichtung wird bevorzugt ein Rechner eingesetzt, der ausgebildet ist die Lötvorrichtung anzusteuern. Die Recheneinrichtung kann auch eine speicherprogrammierbare Steuerung umfassen.

Dabei ist die Recheneinrichtung ausgebildet, die Information über die Lötvorrichtung abhängig von einer Referenzdarstellung wenigstens eines Teils der Lötvorrichtung zu bestimmen, wobei die Erfassungseinrichtung ausgebildet ist, die Referenzdarstellung als bildliche Darstellung zu erfassen, oder wobei die Recheneinrichtung ausgebildet ist, die bildliche Darstellung aus einem Speicher zu lesen.

Vorteilhafterweise ist die Erfassungseinrichtung ausgebildet, die Referenzdarstellung zu erfassen, wenn eine momentane Lötwelle die vorgegebene Höhe erreicht oder überschreitet. Dadurch wird die Erfassungseinrichtung automatisiert ausgelöst.

Vorteilhafterweise ist die Erfassungseinrichtung ausgebildet, die Referenzdarstellung zu erfassen, wenn ein Stromkreis geschlossen wird, durch den ein Strom durch die momentane Lötwelle und einen Kontakt fließt, wobei ein Tiegel der Lötvorrichtung oder eine Lötdüse der Lötvorrichtung in vorgegebener Position in der Lötvorrichtung angeordnet ist. Dadurch wird die Erfassungseinrichtung automatisiert ausgelöst, wenn der Stromkreis bei einer herkömmlichen Lötwellenhöhenmessung geschlossen wird.

Vorteilhafterweise ist die Recheneinrichtung ausgebildet, Information über die bildliche Darstellung mit Information über die Referenzdarstellung zu vergleichen, wobei die Recheneinrichtung ausgebildet ist, abhängig von einem Ergebnis des Vergleichs eine Abweichung einer momentanen Höhe der momentanen Lötwelle von der vorgegebenen Höhe zu erkennen und/oder ein Betriebszustand der Lötvorrichtung zur Lötwellenhöhenmessung wahlweise zuzulassen oder zu verhindern. Die Lötwellenhöhenmessung ist so gezielt auslösbar.

Vorteilhafterweise ist die Recheneinrichtung ausgebildet, Information über die bildliche Darstellung mit Information über die Referenzdarstellung zu vergleichen, wobei die Recheneinrichtung ausgebildet ist, abhängig von einem Ergebnis des Vergleichs eine momentan in der Lötvorrichtung eingesetzte Lötdüse zu erkennen und/oder ein Betriebszustand der Lötvorrichtung zum Löten mit der eingesetzten Lötdüse wahlweise zuzulassen oder zu verhindern. Der Lötvorgang wird dadurch beendet, wenn eine ungeeignete Lötdüse erkannt wurde.

Vorteilhafterweise ist die Recheneinrichtung ausgebildet, Information über die bildliche Darstellung mit Information über die Referenzdarstellung zu vergleichen, wobei die Recheneinrichtung ausgebildet ist, abhängig von einem Ergebnis des Vergleichs ein momentaner Oxidationsgrad der Lötdüse zu erkennen und/oder ein Betriebszustand der Lötvorrichtung zum Aufbrechen einer Oxidschicht wahlweise zuzulassen oder zu verhindern. Der Vorgang zum Aufbrechen der Oxidschicht wird so gezielt bei Bedarf durchgeführt.

Weitere Ausführungsformen der Erfindung ergeben sich aus der folgenden Beschreibung und der Zeichnung. In der Zeichnung zeigt
- Fig. 1: schematisch eine Lötvorrichtung,
- Fig. 2: schematisch ein erstes Verfahren zum Betreiben der Lötvorrichtung,
- Fig. 3: schematisch ein zweites Verfahren zum Betreiben der Lötvorrichtung,
- Fig. 4: schematisch ein drittes Verfahren zum Betreiben der Lötvorrichtung.

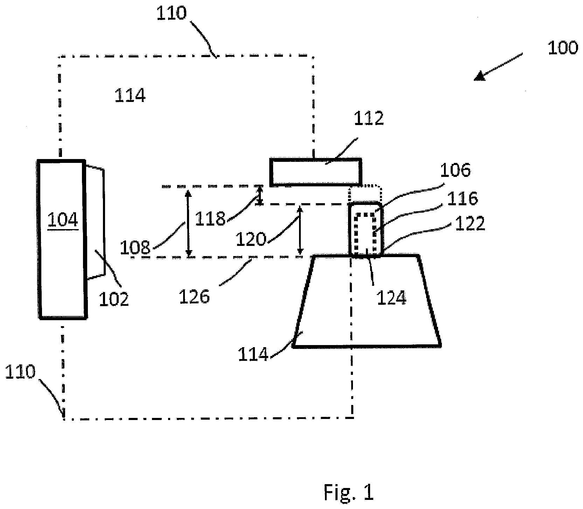

Fig. 1 zeigt schematisch eine Lötvorrichtung 100. Die Lötvorrichtung 100 umfasst eine Erfassungseinrichtung 102 und eine Recheneinrichtung 104.

Die Erfassungseinrichtung 102 ist ausgebildet, eine bildliche Darstellung wenigstens eines Teils der Lötvorrichtung 100 zu erfassen.

Die Recheneinrichtung 104 ist ausgebildet, mittels automatisierter Verarbeitung der bildlichen Darstellung abhängig von Information über die Lötvorrichtung aus der bildlichen Darstellung ein momentaner Betriebszustand der Lötvorrichtung 100 zu bestimmen.

Als Erfassungseinrichtung 102 wird bevorzugt eine digitale Kamera verwendet. Als Recheneinrichtung 104 wird bevorzugt eine speicherprogrammierbare Steuerung eingesetzt, die ausgebildet ist die Lötvorrichtung anzusteuern.

Die Recheneinrichtung 104 ist ausgebildet, die Information über die Lötvorrichtung 100 abhängig von einer Referenzdarstellung wenigstens eines Teils der Lötvorrichtung 100 zu bestimmen.

Die Erfassungseinrichtung 102 ist ausgebildet, bildliche Darstellungen zumindest von Teilen der Lötvorrichtung 100 zu erfassen. Dazu ist die Erfassungseinrichtung 102, beispielsweise die digitale Kamera, an der Lötvorrichtung so befestigt, dass von der Erfassungseinrichtung 102 aufgenommene digitale Bilder diese Teile wiedergeben.

Die Recheneinrichtung 104 ist ausgebildet die bildliche Darstellung oder die Referenzdarstellung von der Erfassungseinrichtung zu empfangen und/oder aus einem Speicher zu lesen.

Die bildliche Darstellung, beispielsweise einer Lötdüse 116 oder einer Lötwelle 106 mit vorgegebener Höhe 108, wird beispielsweise als Referenzdarstellung im Speicher gespeichert. Die Erfassungseinrichtung 102 ist optional ausgebildet, die bildliche Darstellung der Referenzdarstellung zu erfassen und in dem Speicher abzuspeichern.

Die Erfassungseinrichtung 102 ist optional ausgebildet, die Referenzdarstellung zu erfassen, wenn die momentane Lötwelle 106 die vorgegebene Höhe 108 erreicht.

Die Erfassungseinrichtung 102 ist optional ausgebildet, die Referenzdarstellung zu erfassen, wenn ein Stromkreis 110 geschlossen wird, durch den ein Strom durch die momentane Lötwelle 106 und einen Kontakt 112 fließt, wobei ein Tiegel 114 der Lötvorrichtung 100 oder die Lötdüse 116 der Lötvorrichtung 100 in vorgegebener Position 126 in der Lötvorrichtung 100 angeordnet ist. Die Erfassungseinrichtung 102 ist beispielsweise am Tiegel 114 befestigt und erzeugt bildliche Darstellungen, die die Lötwelle 106 wiedergeben.

Als Kontakt 112 wird beispielsweise eine Nadel eingesetzt, die über elektrische Leitungen mit einem ersten Eingang der Recheneinrichtung 104 verbunden ist. Durch elektrische Leitungen ist ein zweiter Eingang der Recheneinrichtung 104 mit dem Lot 122 im Tiegel 114 und damit mit der Lötwelle 106 verbunden.

Die Recheneinrichtung 104 ist beispielsweise ausgebildet, eine Ansteuerung vorzunehmen in der der Tiegel 114 mit der Lötdüse 116 in die vorgegebene Position 126 bewegt wird. Im Tiegel erwärmtes Lot 122 wird dann mittels Induktionspumpe in einer Richtung, die der Schwerkraft entgegengesetzt ist, durch eine Öffnung der Lötdüse 116 gepumpt. Entlang einer äußeren Oberfläche 124 der Lötdüse 116 fließt das Lot 122 aufgrund der Schwerkraft zurück in den Tiegel 114. Dadurch entsteht die momentane Lötwelle 106.

Berührt die momentane Lötwelle 106 den Kontakt 112, wird der Stromkreis 110 geschlossen. Dadurch wird die Erfassungseinrichtung 102 automatisiert ausgelöst, wenn der Stromkreis 110 geschlossen wird. Die Stromversorgung für den Stromkreis 110 und die Messung des Stroms erfolgt beispielsweise durch die speicherprogrammierbare Steuerung.

Die Recheneinrichtung 104 ist beispielsweise ausgebildet, Information über die bildliche Darstellung mit Information über die Referenzdarstellung zu vergleichen. Dazu wird eine Bildverabeitungssoftware eingesetzt, die bildliche Darstellung auswertet und Information über die bildliche Darstellung erzeugt, die mit der Information über die Referenzdarstellung vergleichbar ist.

Die Recheneinrichtung 104 ist beispielsweise ausgebildet abhängig von einem Ergebnis des Vergleichs eine Abweichung 118 einer momentanen Höhe 120 der momentanen Lötwelle 106 von der vorgegebenen Höhe 108 zu erkennen.

Die Recheneinrichtung 104 ist beispielsweise ausgebildet ein Betriebszustand der Lötvorrichtung 100 zur Lötwellenhöhenmessung wahlweise zuzulassen oder zu verhindern.

Beispielsweise ist die Recheneinrichtung 104 ausgebildet, abhängig von einem Ergebnis des Vergleichs eine momentan in der Lötvorrichtung 100 eingesetzte Lötdüse 116 zu erkennen.

Beispielsweise ist die Recheneinrichtung 104 ausgebildet, ein Betriebszustand der Lötvorrichtung 100 zum Löten mit der eingesetzten Lötdüse 116 wahlweise zuzulassen oder zu verhindern.

Beispielsweise ist die Recheneinrichtung 104 ausgebildet, abhängig von einem Ergebnis des Vergleichs ein momentaner Oxidationsgrad der Lötdüse 116 zu erkennen und/oder ein Betriebszustand der Lötvorrichtung 100 zum Aufbrechen einer Oxidschicht wahlweise zuzulassen oder zu verhindern. Der Vorgang zum Aufbrechen der Oxidschicht wird so gezielt bei Bedarf durchgeführt.

Mittels automatisierter Verarbeitung der bildlichen Darstellung wird abhängig von Information über die Lötvorrichtung 100 und von Information aus der bildlichen Darstellung, ein momentaner Betriebszustand der Lötvorrichtung 100 bestimmt. Dies wird am Beispiel der folgenden Verfahren beschrieben.

Die Information über die Lötvorrichtung 100 wird dabei abhängig von der Referenzdarstellung wenigstens eines Teils der Lötvorrichtung 100 bestimmt, wobei Information über die Referenzdarstellung als bildliche Darstellung erfasst wird oder wobei Information über die Referenzdarstellung aus dem Speicher gelesen wird.

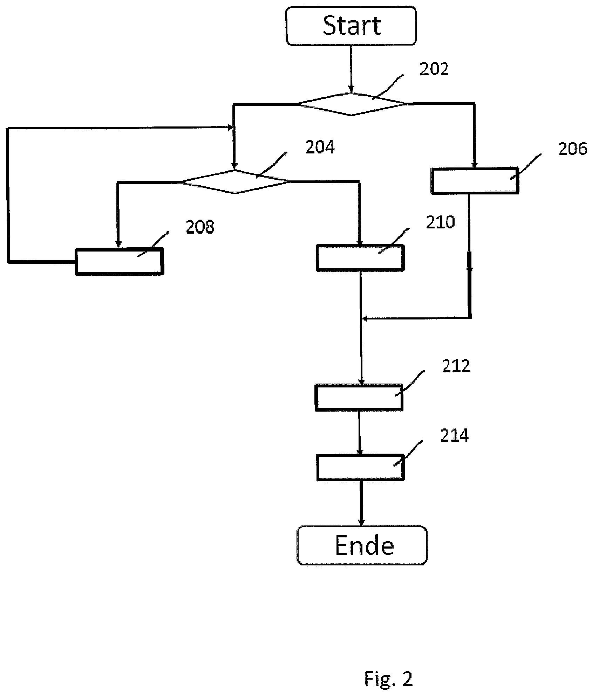

Fig. 2 zeigt schematisch ein erstes Verfahren zum Betreiben der Lötvorrichtung 100. Das erste Verfahren wird beispielsweise gestartet, wenn die Lötvorrichtung 100 eingeschaltet wird.

Dabei charakterisiert die Referenzdarstellung eine Lötwelle 106 mit einer vorgegebenen Höhe 108. Dies ermöglicht es eine Lötwellenhöhe zu bewerten, ohne dass die Lötvorrichtung für jede Bewertung eine Lötwellenhöhenmessung mittels herkömmlichen Verfahrens durchführen muss.

Nach dem Start wird in einem optionalen Schritt 202 geprüft, ob die Referenzdarstellung bereits im Speicher vorhanden ist. Wenn die Referenzdarstellung nicht im Speicher vorhanden ist, wird ein optionaler Schritt 204 ausgeführt. Anderenfalls wird ein Schritt 206 ausgeführt.

Im Schritt 204 wird geprüft, ob die vorgegebene Position 126 erreicht ist und die momentane Höhe 120 der Lötwelle 106 die vorgegebene Höhe 108 erreicht hat. Beispielsweise wird geprüft, ob der Stromkreis 110 geschlossen ist. Wenn die vorgegebene Position 126 erreicht ist und die momentane Höhe 120 der Lötwelle 106 die vorgegebene Höhe 108 erreicht hat, wird ein optionaler Schritt 210 ausgeführt. Anderenfalls wird ein optionaler Schritt 208 ausgeführt.

Im Schritt 208 wir der Tiegel 114 mit der Lötdüse 116 zur vorgegebene Position 126 bewegt und/oder eine Pumpleistung der Induktionspumpe und damit die momentane Höhe 120 der Lötwelle 106 erhöht. Wenn der Stromkreis 110 geschlossen wird, fließt der Strom durch die momentane Lötwelle 106 und den Kontakt 112 während der Tiegel 114 der Lötvorrichtung 100 und/oder die Lötdüse 116 der Lötvorrichtung 100 in der vorgegebenen Position 126 in der Lötvorrichtung 100 angeordnet sind.

Anschließend wird optional der Schritt 204 ausgeführt.

Im Schritt 210 wird die Referenzdarstellung erfasst.

Die Referenzdarstellung wird erfasst, wenn die momentane Lötwelle 106 die vorgegebene Höhe 108 erreicht. Dadurch kann die Referenzdarstellung einfach ausgelöst werden. Der Zeitpunkt, zu dem die vorgegebene Höhe 108 erreicht wird, wird beispielsweise bei Inbetriebnahme zusätzlich einmalig mittels einer herkömmlichen Lötwellenhöhenmessung ermittelt.

Nach dem Schritt 210 wird ein Schritt 212 ausgeführt.

Im Schritt 206 wird die Referenzdarstellung aus dem Speicher gelesen. Nach dem Schritt 206 wird der Schritt 212 ausgeführt.

Im Schritt 212 wird die bildliche Darstellung erfasst. Beispielsweise wird ein digitales Bild erzeugt, das wenigstens einen Teil der Lötvorrichtung 100 repräsentiert. Das digitale Bild zeigt im Beispiel einen Ausschnitt auf dem zumindest die momentane Höhe 120 der momentanen Lötwelle 106 erkennbar ist. Dies wird beispielsweise durch geeignet Montage der digitalen Kamera bezüglich des Tiegels 114 oder der Lötdüse 116 erreicht.

Anschließend wird ein Schritt 214 ausgeführt.

Im Schritt 214 wird Information über die bildliche Darstellung mit Information über die Referenzdarstellung verglichen.

Abhängig von einem Ergebnis des Vergleichs wird beispielsweise eine Abweichung 118 einer momentanen Höhe 120 der momentanen Lötwelle 106 von der vorgegebenen Höhe 108 erkannt.

Beispielsweise wird ein Betriebszustand der Lötvorrichtung 100 zur Lötwellenhöhenmessung wahlweise zugelassen oder verhindert. Dies kann abhängig oder unabhängig von der Abweichung 118 erfolgen.

Anschließend endet das erste Verfahren. Das erste Verfahren kann im Betrieb der Lötvorrichtung 100 regelmäßig oder unregelmäßig wiederholt werden.

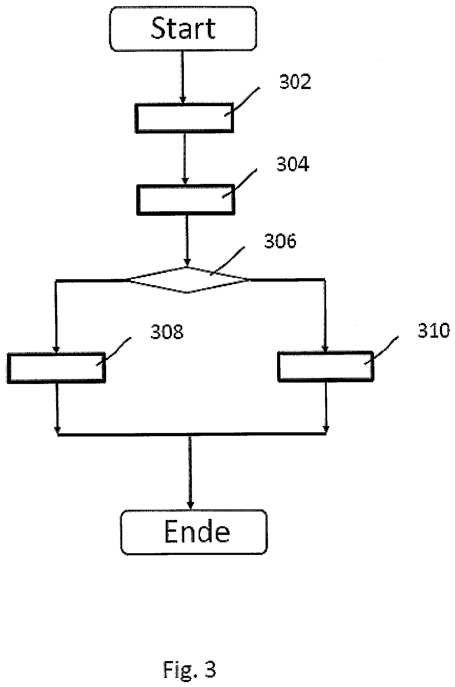

Fig. 3 zeigt schematisch ein zweites Verfahren zum Betreiben der Lötvorrichtung 100.

Dabei charakterisiert die Referenzdarstellung die Lötdüse 116, die in die Lötvorrichtung 100 einsetzbar ist.

Nach dem Start wird in einem Schritt 302 die bildliche Darstellung, beispielsweise als Bild der digitalen Kamera erfasst.

Anschließend wird ein Schritt 304 ausgeführt.

Im Schritt 304 wird eine Referenzdarstellung, beispielsweise eine Darstellung von wenigstens einer einsetzbaren Lötdüse aus dem Speicher gelesen. Beispielsweise wird in einer Düsendatenbank nach der Lötdüse gesucht, die für den Lötprozess geeignete ist. Für diese wird eine zuvor in der Datenbank hinterlegte Darstellung als Referenzdarstellung gelesen.

Anschließend wird ein Schritt 306 ausgeführt.

Im Schritt 306 wird Information über die bildliche Darstellung mit Information über die Referenzdarstellung verglichen. Wenn die Referenzdarstellung der einsetzbaren Lötdüse, und die Information über die bildliche Darstellung der momentanen Lötdüse 116 übereinstimmen, wird ein Schritt 308 ausgeführt. Anderenfalls wird ein Schritt 310 ausgeführt.

Abhängig von einem Ergebnis des Vergleichs wird eine momentan in der Lötvorrichtung 100 eingesetzte Lötdüse 116 somit überprüft.

Im Schritt 308 wird ein Betriebszustand der Lötvorrichtung 100 zum Löten mit der eingesetzten Lötdüse 116 zugelassen. Anschließend wird das zweite Verfahren beendet.

Im Schritt 310 wird ein Betriebszustand der Lötvorrichtung 100 zum Löten mit der eingesetzten Lötdüse 116 verhindert. Dies ermöglicht es den Lötvorgang zu verhindern, wenn eine ungeeignete Lötdüse eingesetzt ist. Anschließend wird das zweite Verfahren beendet.

Das zweite Verfahren kann im Betrieb der Lötvorrichtung 100 regelmäßig oder unregelmäßig wiederholt werden.

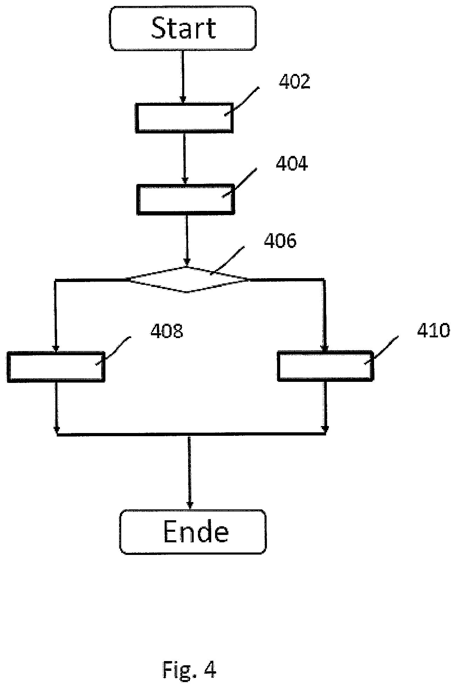

Fig. 4 zeigt schematisch ein drittes Verfahren zum Betreiben der Lötvorrichtung 100.

Dabei charakterisiert die Referenzdarstellung einen Oxidationsgrad der Lötdüse 116 beim Abfluss des Lots 122 über wenigstens einen Teil der Oberfläche 124 der Lötdüse 116 der Lötvorrichtung 100.

Nach dem Start wird in einem Schritt 402 eine bildliche Darstellung wenigstens eines Teils der Lötvorrichtung 110, beispielsweise als digitales Bild der Kamera, erfasst.

Anschließend wird ein Schritt 404 ausgeführt.

Im Schritt 404 wird eine Referenzdarstellung, beispielsweise eine Referenzdarstellung einer Lötdüse mit gewünschtem Oxidationsgrad aus dem Speicher gelesen. Beispielsweise wird in einer Datenbank nach der Referenzdarstellung gesucht, die den für den momentanen Lötvorgang gewünschten Oxidationsgrad wiedergibt. Für diese wird eine zuvor in der Datenbank hinterlegte Darstellung als Referenzdarstellung gelesen.

Anschließend wird ein Schritt 406 ausgeführt.

Im Schritt 406 wird Information über die bildliche Darstellung mit Information über die Referenzdarstellung verglichen. Wenn ein Grenzwert für den Oxidationsgrad nicht überschritten wird, wird ein Schritt 408 ausgeführt. Anderenfalls wird ein Schritt 410 ausgeführt.

Abhängig von einem Ergebnis des Vergleichs wird so ein momentaner Oxidationsgrad der Lötdüse 116 erkannt wird.

Im Schritt 408 wird ein Betriebszustand der Lötvorrichtung 100 zum Aufbrechen einer Oxidschicht zugelassen. Anschließend wird das dritte Verfahren beendet.

Im Schritt 410 wird ein Betriebszustand der Lötvorrichtung 100 zum Aufbrechen einer Oxidschicht verhindert. Dies ermöglicht es den Lötvorgang nur dann zu unterbrechen und die Oxidationsschicht aufzubrechen, wenn der Oxidationsgrad dies erfordert. Anschließend wird das dritte Verfahren beendet.

Das dritte Verfahren kann im Betrieb der Lötvorrichtung 100 regelmäßig oder unregelmäßig wiederholt werden.

## Patentansprüche

1. Verfahren zum Betreiben einer Lötvorrichtung (100),
wobei die Lötvorrichtung (100) einen Löttiegel (114) und eine in die Lötvorrichtung eingesetzte Lötdüse (116), durch die Lot (122) zur Erzeugung einer Lötwelle (106) gepumpt wird, umfasst,
wobei eine bildliche Darstellung der Lötwelle (106) erfasst wird (212, 304, 404),
wobei mittels automatisierter Verarbeitung der erfassten bildlichen Darstellung abhängig von Information über die Lötvorrichtung (100) aus der erfassten bildlichen Darstellung ein momentaner Betriebszustand der Lötvorrichtung (100) bestimmt wird,
**dadurch gekennzeichnet,**
**dass** die Information über die Lötvorrichtung (100) abhängig von einer Referenzdarstellung der Lötwelle (106) bestimmt wird,
wobei die Referenzdarstellung als bildliche Darstellung erfasst wird (210) oder aus einem Speicher gelesen wird (206, 304, 404),
wobei die Referenzdarstellung einen Oxidationsgrad der Lötdüse (116) charakterisiert,
wobei Information über die erfasste bildliche Darstellung mit Information über die Referenzdarstellung verglichen wird (406),
wobei abhängig von einem Ergebnis des Vergleichs ein momentaner Oxidationsgrad der Lötdüse (116) beim Abfluss des Lots (122) über wenigstens einen Teil einer Oberfläche (124) der Lötdüse (116) erkannt wird und
**dass** bei Überschreiten eines Grenzwerts für den Oxidationsgrad ein Betriebszustand der Lötvorrichtung (100) zum Aufbrechen einer Oxidschicht zugelassen (408) wird (410).

2. Verfahren nach Anspruch 1, **dadurch gekennzeichnet, dass** die Referenzdarstellung erfasst wird (212), wenn eine momentane Lötwelle (106) eine vorgegebene Höhe (108) erreicht.

3. Verfahren nach Anspruch 2, **dadurch gekennzeichnet, dass** die Referenzdarstellung erfasst wird (210), wenn ein Stromkreis (110) geschlossen wird, durch den ein Strom durch die momentane Lötwelle (106) und einen Kontakt (112) fließt, wobei der Tiegel (114) der Lötvorrichtung (100) oder die Lötdüse (116) der Lötvorrichtung (100) in vorgegebener Position (126) in der Lötvorrichtung (100) angeordnet wird (204, 208).

4. Verfahren nach Anspruch 2 oder 3, **dadurch gekennzeichnet, dass** Information über die erfasste bildliche Darstellung mit Information über die Referenzdarstellung verglichen wird (212),
wobei abhängig von einem Ergebnis des Vergleichs eine Abweichung einer momentanen Höhe (120) der momentanen Lötwelle (106) von der vorgegebenen Höhe (108) erkannt wird (214) und ein Betriebszustand der Lötvorrichtung zur Lötwellenhöhenmessung wahlweise (214) zugelassen oder verhindert wird.

5. Verfahren nach Anspruch 1, **dadurch gekennzeichnet,**
**dass** eine bildliche Darstellung der Lötdüse (116) erfasst wird, dass Information über die erfasste bildliche Darstellung mit Information über die Referenzdarstellung verglichen wird (306), wobei abhängig von einem Ergebnis des Vergleichs eine momentan in der Lötvorrichtung (100) eingesetzte Lötdüse (116) erkannt wird und ein Betriebszustand der Lötvorrichtung (100) zum Löten mit der eingesetzten Lötdüse (116) wahlweise zugelassen (308) oder verhindert wird (310).

6. Lötvorrichtung (100), wobei die Lötvorrichtung (100) einen Löttiegel (114) und eine in die Lötvorrichtung (100)
eingesetzte Lötdüse (116), durch die Lot (122) zur Erzeugung einer Lötwelle (106) gepumpt wird, umfasst,
wobei die Lötvorrichtung (100) eine Erfassungseinrichtung (102) und eine Recheneinrichtung (104) umfasst, wobei die Erfassungseinrichtung (102) ausgebildet ist eine bildliche Darstellung der Lötdüse (116) oder der Lötwelle (106) zu erfassen, wobei die Recheneinrichtung (104) ausgebildet ist, mittels automatisierter Verarbeitung der bildlichen erfassten Darstellung abhängig von Information über die Lötvorrichtung (100) aus der bildlichen erfassten Darstellung ein momentaner Betriebszustand der Lötvorrichtung (100) zu bestimmen,
wobei die Recheneinrichtung (104) ausgebildet ist, die Information über die Lötvorrichtung (100) abhängig von einer Referenzdarstellung der Lötwelle (106) zu bestimmen,
wobei die Erfassungseinrichtung (102) ausgebildet ist, die Referenzdarstellung als bildliche Darstellung zu erfassen oder aus einem Speicher zu lesen,
wobei die Referenzdarstellung einen Oxidationsgrad der Lötdüse (116) beim Abfluss des Lots (122) über wenigstens einen Teil einer Oberfläche (124) einer Lötdüse (106) der Lötvorrichtung (100) charakterisiert,
wobei die Recheneinrichtung (104) ausgebildet ist, Information über die erfasste bildliche Darstellung mit Information über die Referenzdarstellung zu vergleichen,
wobei die Recheneinrichtung (104) ausgebildet ist, abhängig von einem Ergebnis des Vergleichs einen momentanen Oxidationsgrad des Lots (122) zu erkennen und bei Überschreiten eines Grenzwert für den Oxidationsgrad einen Betriebszustand der Lötvorrichtung (100) zum Aufbrechen einer Oxidschicht zuzulassen.

7. Lötvorrichtung (100) nach Anspruch 6, **dadurch gekennzeichnet, dass** die Erfassungseinrichtung (102) ausgebildet ist, die Referenzdarstellung zu erfassen, wenn eine momentane Lötwelle (106) die vorgegebene Höhe (108) erreicht oder überschreitet.

8. Lötvorrichtung nach Anspruch 7, **dadurch gekennzeichnet, dass** die Erfassungseinrichtung (102) ausgebildet ist, die Referenzdarstellung zu erfassen, wenn ein Stromkreis (110) geschlossen wird, durch den ein Strom durch die momentane Lötwelle (106) und einen Kontakt (112) fließt, wobei ein Tiegel (114) der Lötvorrichtung (100) oder eine Lötdüse (116) der Lötvorrichtung (100) in vorgegebener Position (126) in der Lötvorrichtung (100) angeordnet ist.

9. Lötvorrichtung (100) nach einem der Ansprüche 6 bis 8, **dadurch gekennzeichnet, dass** die Recheneinrichtung (104) ausgebildet ist, Information über die erfasste bildliche Darstellung mit Information über die Referenzdarstellung zu vergleichen, wobei die Recheneinrichtung (104) ausgebildet ist, abhängig von einem Ergebnis des Vergleichs eine Abweichung (118) einer momentanen Höhe (120) der momentanen Lötwelle (106) von der vorgegebenen Höhe (108) zu erkennen und/oder ein Betriebszustand der Lötvorrichtung (100) zur Lötwellenhöhenmessung wahlweise zuzulassen oder zu verhindern.

10. Lötvorrichtung (100) nach Anspruch 6, **dadurch gekennzeichnet, dass** die Referenzdarstellung eine Lötdüse (116) charakterisiert, die in die Lötvorrichtung einsetzbar ist.

11. Lötvorrichtung (100) nach Anspruch 10, **dadurch gekennzeichnet, dass** die Recheneinrichtung (100) ausgebildet ist, Information über die erfasste bildliche Darstellung mit Information über die Referenzdarstellung zu vergleichen, wobei die Recheneinrichtung (100) ausgebildet ist, abhängig von einem Ergebnis des Vergleichs eine momentan in der Lötvorrichtung (100) eingesetzte Lötdüse (106) zu erkennen und/oder ein Betriebszustand der Lötvorrichtung (100) zum Löten mit der eingesetzten Lötdüse (106) wahlweise zuzulassen oder zu verhindern.

## Claims

1. Method for operating a soldering device (100), the soldering device (100) comprising a solder pot (114) and a solder nozzle (116) inserted into the soldering device, through which nozzle solder (122) is pumped to create a solder wave (106), an image representation of the solder wave (106) being acquired (212, 304, 404), an instantaneous operating state of the soldering device (100) being determined from the acquired image representation by means of automated processing of the acquired image representation depending on information about the soldering device (100), **characterized in that** the information about the soldering device (100) is determined depending on a reference representation of the solder wave (106), the reference representation being acquired (210) or read in (206, 304, 404) from a memory as an image representation, the reference representation characterizing an oxidation degree of the solder nozzle (116), information about the acquired image representation being compared (406) with information about the reference representation, an instantaneous oxidation degree of the solder nozzle (116) being detected when the solder (122) flows out over at least a portion of a surface (124) of the solder nozzle (116), depending on a result of the comparison, and **in that**, when a limit value for the oxidation degree is exceeded, an operating state of the soldering device (100) for breaking up an oxide layer is (410) permitted (408).

2. Method according to claim 1, **characterized in that** the reference representation is acquired (212) when an instantaneous solder wave (106) reaches a predetermined height (108).

3. Method according to claim 2, **characterized in that** the reference representation is acquired (210) when an electric circuit (110), via which a current flows through the instantaneous solder wave (106) and a contact (112), is closed, the pot (114) of the soldering device (100) or the solder nozzle (116) of the soldering device (100) being arranged (204, 208) in a predetermined position (126) in the soldering device (100).

4. Method according to claim 2 or 3, **characterized in that** information about the acquired image representation is compared (212) with information about the reference representation, a deviation of an instantaneous height (120) of the instantaneous solder wave (106) from the predetermined height (108) being detected (214), depending on a result of the comparison, and an operating state of the soldering device for measuring the height of the solder wave being selectively (214) permitted or prohibited.

5. Method according to claim 1, **characterized in that** an image representation of the solder nozzle (116) is acquired, **in that** information about the acquired image representation is compared (306) with information about the reference representation, a solder nozzle (116) instantaneously inserted in the soldering device (100) being detected depending on a result of the comparison and an operating state of the soldering device (100) for soldering with the inserted solder nozzle (116) being selectively permitted (308) or prohibited (310).

6. Soldering device (100), wherein the soldering device (100) comprises a solder pot (114) and a solder nozzle (116) inserted into the soldering device (100), through which nozzle solder (122) is pumped to create a solder wave (106), wherein the soldering device (100) comprises an acquisition apparatus (102) and a computing apparatus (104), wherein the acquisition apparatus (102) is designed to acquire an image representation of the solder nozzle (116) or the solder wave (106), wherein the computing apparatus (104) is designed to determine an instantaneous operating state of the soldering device (100) from the acquired image representation by means of automated processing of the acquired image representation depending on information about the soldering device (100), wherein the computing apparatus (104) is designed to determine the information about the soldering device (100) depending on a reference representation of the solder wave (106), wherein the acquisition apparatus (102) is designed to acquire the reference representation or to read it in from a memory as an image representation, wherein the reference representation characterizes an oxidation degree of the solder nozzle (116) when the solder (122) flows out over at least a portion of a surface (124) of a solder nozzle (106) of the soldering device (100), wherein the computing apparatus (104) is designed to compare information about the acquired image representation with information about the reference representation, wherein the computing apparatus (104) is designed to detect an instantaneous oxidation degree of the solder (122) depending on a result of the comparison and, when a limit value for the oxidation degree is exceeded, to permit an operating state of the soldering device (100) for breaking up an oxide layer.

7. Soldering device (100) according to claim 6, **characterized in that** the acquisition apparatus (102) is designed to acquire the reference representation when an instantaneous solder wave (106) reaches or exceeds the predetermined height (108).

8. Soldering device according to claim 7, **characterized in that** the acquisition apparatus (102) is designed to acquire the reference representation when an electric circuit (110), via which a current flows through the instantaneous solder wave (106) and a contact (112), is closed, a pot (114) of the soldering device (100) or a solder nozzle (116) of the soldering device (100) being arranged in a predetermined position (126) in the soldering device (100).

9. Soldering device (100) according to any of claims 6 to 8, **characterized in that** the computing apparatus (104) is designed to compare information about the acquired image representation with information about the reference representation, the computing apparatus (104) being designed to detect, depending on a result of the comparison, a deviation (118) of an instantaneous height (120) of the instantaneous solder wave (106) from the predetermined height (108) and/or to selectively permit or prohibit an operating state of the soldering device (100) for measuring the height of the solder wave.

10. Soldering device (100) according to claim 6, **characterized in that** the reference representation characterizes a solder nozzle (116) which can be inserted into the soldering device.

11. Soldering device (100) according to claim 10, **characterized in that** the computing apparatus (100) is designed to compare information about the acquired image representation with information about the reference representation, the computing apparatus (100) being designed to detect, depending on a result of the comparison, a solder nozzle (106) instantaneously inserted in the soldering device (100) and/or to selectively permit or prohibit an operating state of the soldering device (100) for soldering with the inserted solder nozzle (106).

## Revendications

1. Procédé pour faire fonctionner un dispositif de brasage (100),
dans lequel le dispositif de brasage (100) comprend un creuset de brasage (114) et une buse de brasage (116) insérée dans le dispositif de brasage, par laquelle la brasure (122) est pompée pour produire une vague de brasage (106),
dans lequel une représentation par image de la vague de brasage (106) est acquise (212, 304, 404),
dans lequel un état de fonctionnement momentané du dispositif de brasage (100) est déterminé au moyen du traitement automatisé de la représentation par image acquise en fonction de l'information concernant le dispositif de brasage (100) à partir de la représentation par image acquise,
**caractérisé en ce**
**que** l'information concernant le dispositif de brasage (100) est déterminée en fonction d'une représentation de référence de la vague de brasage (106),
dans lequel la représentation de référence est acquise (210) en tant que représentation par image ou est lue (206, 304, 404) à partir d'une mémoire,
dans lequel la représentation de référence caractérise un degré d'oxydation de la buse de brasage (116),
dans lequel l'information concernant la représentation par image acquise est comparée (406) à l'information concernant la représentation de référence,
dans lequel en fonction d'un résultat de la comparaison, un degré d'oxydation momentané de la buse de brasage (116) lors de l'écoulement de la brasure (122) sur au moins une partie d'une surface (124) de la buse de brasage (116) est identifié et
**que** lorsqu'une valeur limite pour le degré d'oxydation est dépassée un état de fonctionnement du dispositif de brasage (100) pour briser une couche d'oxyde est autorisé (408) (410) .

2. Procédé selon la revendication 1, **caractérisé en ce que** la représentation de référence est acquise (212) lorsqu'une vague de brasage momentanée (106) atteint une hauteur prédéfinie (108).

3. Procédé selon la revendication 2, **caractérisé en ce que** la représentation de référence est acquise (210) lorsqu'un circuit (110) est fermé, par lequel un courant circule à travers la vague de brasage momentanée (106) et un contact (112), dans lequel le creuset (114) du dispositif de brasage (100) ou la buse de brasage (116) du dispositif de brasage (100) est disposé(e) (204, 208) dans une position prédéfinie (126) dans le dispositif de brasage (100).

4. Procédé selon la revendication 2 ou 3, **caractérisé en ce que** l'information concernant la représentation par image acquise est comparée (212) à l'information concernant la représentation de référence,
dans lequel en fonction d'un résultat de la comparaison un écart entre une hauteur momentanée (120) de la vague de brasage momentanée (106) et la hauteur prédéfinie (108) est identifié (214) et un état de fonctionnement du dispositif de brasage pour mesurer la hauteur de la vague de brasage est sélectivement (214) autorisé ou empêché.

5. Procédé selon la revendication 1, **caractérisé en ce qu'**une représentation par image de la buse de brasage (116) est acquise, que l'information concernant la représentation par image acquise est comparée (306) à l'information concernant la représentation de référence, dans lequel en fonction d'un résultat de la comparaison une buse de brasage (116) insérée momentanément dans le dispositif de brasage (100) est identifiée et un état de fonctionnement du dispositif de brasage (100) pour le brasage avec la buse de brasage (116) insérée est sélectivement autorisé (308) ou empêché (310).

6. Dispositif de brasage (100), dans lequel le dispositif de brasage (100) comprend un creuset de brasage (114) et une buse de brasage (116) insérée dans le dispositif de brasage (100), par laquelle la brasure (122) est pompée pour produire une vague de brasage (106),
dans lequel le dispositif de brasage (100) comprend un système d'acquisition (102) et un système de calcul (104), dans lequel le système d'acquisition (102) est réalisé pour acquérir une représentation par image de la buse de brasage (116) ou de la vague de brasage (106),
dans lequel le système de calcul (104) est réalisé pour déterminer un état de fonctionnement momentané du dispositif de brasage (100) au moyen du traitement automatisé de la représentation acquise par image en fonction de l'information concernant le dispositif de brasage (100) à partir de la représentation acquise par image,
dans lequel le système de calcul (104) est réalisé pour déterminer l'information concernant le dispositif de brasage (100) en fonction d'une représentation de référence de la vague de brasage (106),
dans lequel le système d'acquisition (102) est réalisé pour acquérir la représentation de référence en tant que représentation par image ou pour la lire à partir d'une mémoire,
dans lequel la représentation de référence caractérise un degré d'oxydation de la buse de brasage (116) lors de l'écoulement de la brasure (122) sur au moins une partie d'une surface (124) d'une buse de brasage (106) du dispositif de brasage (100),
dans lequel le système de calcul (104) est réalisé pour comparer l'information concernant la représentation par image acquise à l'information concernant la représentation de référence,
dans lequel le système de calcul (104) est réalisé pour identifier en fonction d'un résultat de la comparaison un degré d'oxydation momentané de la brasure (122) et lorsqu'une valeur limite pour le degré d'oxydation est dépassée pour autoriser un état de fonctionnement du dispositif de brasage (100) pour casser une couche d'oxydation.

7. Dispositif de brasage (100) selon la revendication 6, **caractérisé en ce que** le système d'acquisition (102) est réalisé pour acquérir la représentation de référence lorsqu'une vague de brasage momentanée (106) atteint ou dépasse la hauteur prédéfinie (108).

8. Dispositif de brasage selon la revendication 7, **caractérisé en ce que** le système d'acquisition (102) est réalisé pour acquérir la représentation de référence lorsqu'un circuit (110) est fermé, par lequel un courant circule à travers la vague de brasage momentanée (106) et un contact (112), dans lequel un creuset (114) du dispositif de brasage (100) ou une buse de brasage (116) du dispositif de brasage (100) est disposé(e) dans une position prédéfinie (126) dans le dispositif de brasage (100) .

9. Dispositif de brasage (100) selon l'une quelconque des revendications 6 à 8, **caractérisé en ce que** le système de calcul (104) est réalisé pour comparer l'information concernant la représentation par image acquise à l'information concernant la représentation de référence, dans lequel le système de calcul (104) est réalisé pour identifier en fonction d'un résultat de la comparaison un écart (118) entre une hauteur momentanée (120) de la vague de brasage momentanée (106) et la hauteur prédéfinie (108) et/ou pour sélectivement autoriser ou empêcher un état de fonctionnement du dispositif de brasage (100) pour mesurer la hauteur de la vague de brasage.

10. Dispositif de brasage (100) selon la revendication 6, **caractérisé en ce que** la représentation de référence caractérise une buse de brasage (116), qui peut être insérée dans le dispositif de brasage.

11. Dispositif de brasage (100) selon la revendication 10, **caractérisé en ce que** le système de calcul (100) est réalisé pour comparer l'information concernant la représentation par image acquise à l'information concernant la représentation de référence, dans lequel le système de calcul (100) est réalisé pour identifier une buse de brasage (106) insérée momentanément dans le dispositif de brasage (100) et/ou pour sélectivement autoriser ou empêcher un état de fonctionnement du dispositif de brasage (100) pour le brasage avec la buse de brasage (106) insérée en fonction d'un résultat de la comparaison.
